# EUROPÄISCHE PATENTSCHRIFT

(11) **EP 3 725 672 B1**
(45) Veröffentlichungstag und Bekanntmachung des Hinweises auf die Patenterteilung: **20.10.2021**
(21) Anmeldenummer: 20167004.9
(22) Anmeldetag: 31.03.2020
(51) Int. Cl.: B64C 1/40, B64C 1/06

(54) **INNENVERKLEIDUNGSTEIL ZUR VERKLEIDUNG EINER RUMPFSTRUKTUR EINES LUFTFAHRZEUGS**
INTERIOR CLADDING SECTION FOR COVERING A FUSELAGE STRUCTURE OF AN AIRCRAFT
PARTIE DE REVÊTEMENT INTÉRIEUR DESTINÉ AU REVÊTEMENT D'UNE STRUCTURE DE FUSELAGE D'UN AÉRONEF

(30) Priorität: 17.04.2019 DE 102019205578
(43) Veröffentlichungstag der Anmeldung: 21.10.2020
(73) Patentinhaber: Airbus Operations GmbH, 21129 Hamburg (DE)
(72) Erfinder: Müller, Rainer, 21129 Hamburg (DE); Schliwa, Ralf, 21129 Hamburg (DE)
(74) Vertreter: Isarpatent

(56) Entgegenhaltungen:
- EP-A2- 1 258 343
- EP-A2- 2 462 394
- DE-A1-102004 011 614
- US-A1- 2011 006 159

## Beschreibung

Die vorliegende Erfindung betrifft ein Innenverkleidungsteil zur Verkleidung einer Rumpfstruktur eines Luftfahrzeugs sowie eine Rumpfstruktur für ein Luftfahrzeug.

Ein Rumpf eines Luftfahrzeugs weist typischerweise eine Rahmenstruktur mit einer Vielzahl von Spanten sowie eine Außenhaut auf, welche an der Rahmenstruktur befestigt ist. Die Rahmenstruktur definiert einen Innenraum bzw. eine Kabine des Luftfahrzeugs, wobei die Rahmenstruktur selbst üblicherweise an einer dem Innenraum zugewandten Seite mit Innenverkleidungsteilen verkleidet wird. Zur Verbesserung des Komforts oder allgemein zur Verbesserung der Klimatisierung des Innenraums wird typischerweise eine Isolierung zwischen der Innenverkleidung und der Außenhaut des Rumpfs angebracht, wobei auch zwischen den Spanten und der Innenverkleidung Isoliermaterial angeordnet wird, um die Bildung von Kältebrücken zu vermeiden.

Sowohl in Passagierflugzeugen als auch in Frachtflugzeugen ist es wünschenswert, das Platzangebot des durch die Rahmenstruktur definierten Innenraums möglichst effizient auszunutzen. Vor diesem Hintergrund beschreibt die DE 10 2006 028 956 A1 ein Innenverkleidungsteil zur Verkleidung der Rumpfstruktur eines Luftfahrzeugs mit einem zwischen zwei Decklagen angeordneten Kernmaterial, welches Hohlkammern aufweist, und einer das Kernmaterial umgebenden gasdichten Folie, wobei die Hohlkammern evakuiert sind.

Die WO 2006/083314 A2 beschreibt die Verwendung eines Isolationsmaterials, welches eine Vielzahl von evakuierten Zellen umfasst, in einem Innenverkleidungsteil eines Luftfahrzeugs. Die DE 10 2004 011 614 A1 beschreibt ein Vakuum-Isolationsteil mit einem offenporigen Kernmaterial, welches in einer gasdichten Hülle angeordnet ist. Ein weiteres Vakuum-Isolationsteil ist in der EP 1 157 824 A2 beschrieben. Die EP 2462394 offenbart: Vakuumisolationselement, umfassend: eine Umhüllung mit Gasundurchlässigkeit und mit einem bestimmten dekomprimierten Raum darin; einen Kern, der als eine Struktur zum Beibehalten einer bestimmten Form ausgebildet und an einer Innenseite der Umhüllung angeordnet ist, um die Umhüllung zu tragen; und einen Füllstoff, der als Pulver mit Mikroporen ausgebildet und an der Innenseite der Umhüllung gefüllt ist.

Es ist Aufgabe der vorliegenden Erfindung, ein verbessertes Isolationskonzept für den Rumpf eines Luftfahrzeugs bereitzustellen.

Diese Aufgabe wird jeweils durch die Gegenstände der unabhängigen Ansprüche gelöst.

Nach einem ersten Aspekt der Erfindung ist ein Innenverkleidungsteil zur Verkleidung einer Rumpfstruktur eines Luftfahrzeugs vorgesehen. Das Innenverkleidungsteil umfasst eine sich flächig erstreckende erste Deckschicht, eine sich flächig erstreckende zweite Deckschicht, eine zwischen der ersten und der zweiten Deckschicht angeordnete und mit der ersten und der zweiten Deckschicht verbundene Kernschicht, welche einen Aufnahmehohlraum definiert, und eine Isolationsstruktur mit einem porösen Isolationskern und einer den Isolationskern gasdicht ummantelnden, evakuierten Folienhülle. Die Isolationsstruktur ist in dem Aufnahmehohlraum zwischen der ersten und der zweiten Deckschicht angeordnet.

Gemäß einem zweiten Aspekt der Erfindung ist eine Rumpfstruktur für ein Luftfahrzeug vorgesehen. Die Rumpfstruktur weist eine Vielzahl von Spanten auf, welche entlang einer Rumpflängsrichtung beabstandet zueinander angeordnet sind und einen Rumpfinnenraum definieren. Die Rumpfstruktur weist ferner ein Innenverkleidungsteil gemäß dem ersten Aspekt der Erfindung auf, welches in Bezug auf die Rumpflängsrichtung mit zumindest einem Spant überlappend in dem Rumpfinnenraum angeordnet ist, wobei die Isolationsstruktur des Innenverkleidungsteils in Bezug auf die Rumpflängsrichtung überlappend mit dem Spant angeordnet ist.

Eine der Erfindung zugrundeliegende Idee besteht darin, eine thermische Isolierung im Bereich eines Spants einer Rumpfstruktur in platzsparender Weise zu verbessern, indem eine vakuumisolierte Isolationsstruktur in den Querschnitt eines Innenverkleidungsteils, welches den jeweiligen Spant verkleidet, zu integrieren. Insbesondere ist ein Innenverkleidungsteil mit einem Sandwichaufbau vorgesehen, wobei eine Kernschicht, z.B. ein Wabenkern, der zwischen zwei Deckschichten angeordnet ist, eine Ausnehmung aufweist, in welche die Isolationsstruktur eingelegt ist. Die Isolationsstruktur weist ein poröses Isolationsmaterial auf, welches in einen Foliensack gasdicht eingepackt ist, wobei der Foliensack evakuiert ist. Damit ist das Isolationsmaterial größtenteils gasfrei, wodurch eine äußerst geringe Querschnittsdicke der Isolationsstruktur bei sehr guter Isolationswirkung erzielt wird.

Einer der Vorteile der Erfindung liegt darin, dass die Isolationsstruktur zwischen den zwei Deckschichten angeordnet und seitlich von der Kernschicht, welche die Kernschicht des Innenverkleidungsteils bildet, umgeben ist. Dadurch ist die Isolationsstruktur bestens gegen mechanische Beschädigungen geschützt. Dies beugt einem Entweichen des Vakuums im Foliensack vor, wodurch die Isolationswirkung dauerhaft sichergestellt wird.

Ein weiterer Vorteil der Integration einer vakuumisolierten Struktur in den Querschnitt des Innenverkleidungsteils liegt in der platzsparenden Unterbringung. Insbesondere wird durch das Innenverkleidungsteil selbst eine Isolationswirkung erzielt, wodurch dort, wo die Isolationsstruktur zwischen den Deckschichten angeordnet ist, eine Isolierung zwischen Spant und Innenverkleidungsteil reduziert oder ganz weggelassen werden kann. Dadurch kann das Innenverkleidungsteil mit geringerem Abstand zu der durch die Spanten ausgebildete Rahmenstruktur des Rumpfs angeordnet werden. Somit wird der nutzbare Raum innerhalb der Rumpfstruktur vorteilhaft vergrößert.

Vorteilhafte Ausgestaltungen und Weiterbildungen ergeben sich aus den auf die unabhängigen Ansprüche rückbezogenen Unteransprüchen in Verbindung mit der Beschreibung.

Gemäß einer Ausführungsform des Innenverkleidungsteils ist vorgesehen, dass der Aufnahmehohlraum kernschichtfrei ist und sich zwischen einer der zweiten Deckschicht zugewandten ersten Innenfläche der ersten Deckschicht und einer der ersten Deckschicht zugewandten zweiten Innenfläche der zweiten Deckschicht erstreckt, und dass die Folienhülle der Isolationsstruktur mit der ersten Innenfläche und mit der zweiten Innenfläche verbunden ist. Der Aufnahmehohlraum ist somit durch eine flächige Durchgangsöffnung durch die gesamte Kernschicht hindurch gebildet und die Isolationsstruktur bzw. die Folie der Isolationsstruktur ist direkt mit den Innenflächen der Deckschichten verbunden, beispielsweise verklebt. Dies bietet den Vorteil, dass die Isolationsschicht bei gegebenem Abstand zwischen den Deckschichten mit maximaler Dicke ausgeführt werden kann, wodurch die Isolationswirkung weiter verbessert wird. Durch die Verbindung der Isolationsstruktur mit den Deckschichten trägt die Isolationsstruktur selbst vorteilhaft zur mechanischen Festigkeit des Innenverkleidungsteils bei.

Gemäß einer weiteren Ausführungsform ist der poröse Isolationskern durch pulverförmiges Material gebildet. Der Isolationskern kann somit durch ein Granulat gebildet sein, welches in dem evakuierten Foliensack eingeschlossen ist. Dies erleichtert vorteilhaft die Formgebung des Isolationskerns. Das pulverförmige Material kann beispielsweise verpresst sein. Als Material kommen beispielsweise pyrogene Kieselsäuren in Frage, insbesondere Aerosil ®. Derartige Materialien bieten den Vorteil, dass sie nicht brennbar sind und zudem eine hohe thermische Isolationswirkung erzielen.

Gemäß einer weiteren Ausführungsform ist vorgesehen, dass sich die Isolationsstruktur mit einer Dicke in einem Bereich zwischen 3 mm und 11 mm zwischen der ersten und der zweiten Deckschicht erstreckt. In diesem Dickenbereich wird eine besonders gute Isolationswirkung bei relativ geringer Gesamtdicke des Innenverkleidungsteils erzielt. Insbesondere kann die Dicke der Isolationsstruktur in einem Bereich zwischen 5 mm und 8 mm liegen. Hierbei wird ein besonders platzsparender Aufbau erzielt. Optional ist die Dicke der Isolationsstruktur konstant.

Gemäß einer weiteren Ausführungsform ist vorgesehen, dass die erste Deckschicht und die zweite Deckschicht jeweils aus einem faserverstärkten Kunststoffmaterial gebildet sind. Beispielsweise können Glasfasern als Verstärkungsfasern in ein thermoplastisches oder duroplastisches Matrixmaterial eingebettet sein. Deckschichten aus faserverstärktem Kunststoffmaterial bieten in Kombination mit der Integration der Isolationsstruktur in den Sandwichaufbau den Vorteil, dass diese eine hohe mechanische Festigkeit, insbesondere Biegesteifigkeit aufweisen, wodurch der mechanische Schutz der Isolationsstruktur weiter verbessert wird.

Gemäß einer weiteren Ausführungsform des Innenverkleidungsteils definiert die Kernschicht den Aufnahmehohlraum in Form eines länglichen Streifens. Beispielsweise kann vorgesehen sein, dass sich das Innenverkleidungsteil entlang einer Verkleidungsteilumfangsrichtung gekrümmt erstreckt und der Aufnahmehohlraum entlang der Verkleidungsteilumfangsrichtung verläuft. Durch den streifenförmigen, im Wesentlichen geraden Verlauf des Aufnahmehohlraums wird eine mechanische Schwächung der Kernschicht vorteilhaft verringert.

Gemäß einer weiteren Ausführungsform definiert die Kernschicht zumindest zwei Aufnahmehohlräume, welche entlang einer Verkleidungsteillängsrichtung beabstandet zueinander angeordnet sind und sich parallel zueinander erstrecken, wobei in jedem Aufnahmebereich eine Isolationsstruktur angeordnet ist. Auf diese Weise können vorteilhaft zwei in einer Rumpflängsrichtung beabstandete Spanten mit einem Innenverkleidungsteil verkleidet und jeweils isoliert werden. Dies verringert vorteilhaft den Montageaufwand.

Gemäß einer weiteren Ausführungsform ist vorgesehen, dass ein erster Endbereich des Innenverkleidungsteils eine erste Verbindungsstruktur bildet, und dass ein entgegengesetzt zu dem ersten Endbereich gelegener zweiter Endbereich des Innenverkleidungsteils eine zweite Verbindungsstruktur bildet. Optional weist die erste Verbindungsstruktur eine Nut und die zweite Verbindungsstruktur eine Feder auf. Durch die in Bezug auf die Verkleidungsteillängsrichtung entgegengesetzt angeordneten Verbindungsstrukturen wird eine mechanische Verbindung bzw. Kopplung der Innenverkleidungsteile aneinander erleichtert. Beispielsweise kann vorgesehen sein, dass die erste und die zweite Verbindungsstruktur komplementär zueinander, z.B. als Nut und Feder ausgebildet sind. Auch kann vorgesehen sein, dass eine Verbindungsleiste zumindest teilweise zwischen einem ersten und einem zweiten Innenverkleidungsteil angeordnet ist, welche komplementär zu den Verbindungsstrukturen gestaltet ist.

Gemäß einer Ausführungsform der Rumpfstruktur umfasst diese zusätzlich eine flächige Außenhaut, welche an Spantfüßen der Spanten befestigt ist, eine Primärisolierung mit ersten Isolationsmatten, die an einer dem Rumpfinnenraum zugewandten Innenfläche der Außenhaut zwischen zwei in der Rumpflängsrichtung aufeinanderfolgenden Spanten angeordnet sind, und zweite Isolationsmatten, welche jeweils einen dem Innenraum zugewandten Spantkopf eines jeweiligen Spants überdecken. Hierbei ist das Innenverkleidungsteil derart relativ zu den Spanten angeordnet, dass die Isolationsstruktur des Innenverkleidungsteils sich entlang des Spants und in Bezug auf die Rumpflängsrichtung überlappend zu dem Spant erstreckt. Somit wird der Spant im Bereich des Spantkopfs durch die zweite Isolationsmatte und zusätzlich durch die im Querschnitt des Innenverkleidungsteils untergebrachte Isolationsstruktur isoliert, wodurch der Bildung von Kältebrücken weiter vorgebeugt wird.

Gemäß einer weiteren Ausführungsform ist vorgesehen, dass ein Endbereich des Innenverkleidungsteils jeweils zwischen zwei in der Rumpflängsrichtung aufeinanderfolgenden Spanten angeordnet ist. Demnach erstreckt sich das Innenverkleidungsteil mit der Verkleidungsteillängsrichtung entlang der Rumpflängsrichtung und endet zwischen zwei Spanten. Die Verbindung des Endbereichs mit einem Endbereich eines weiteren Innenverkleidungsteils kann daher zwischen den Spanten erfolgen. In diesem Bereich ist in Richtung der Außenhaut mehr Platz für die Unterbringung zusätzlicher Isolierung, z.B. von Primärisolierung oder anderer Isolationseinrichtungen vorhanden als direkt an einem Spant. Der Bildung einer Kältebrücke im Verbindungsbereich zwischen den Innenverkleidungsteilen kann damit besser vorgebeugt werden.

Gemäß einer weiteren Ausführungsform sind mehrere Innenverkleidungsteile in der Rumpflängsrichtung nacheinander angeordnet, wobei an einem Stoß zwischen einem ersten Innenverkleidungsteil und einem in der Rumpflängsrichtung folgenden zweiten Innenverkleidungsteil eine Verbindungsleiste angeordnet ist. Die Verbindungsleiste kann beispielsweise in Bezug auf die Rumpflängsrichtung zumindest teilweise zwischen den Innenverkleidungsbauteilen angeordnet sein. Die Verbindungsleiste erleichtert vorteilhaft eine Abdichtung zwischen den Bauteilen. Insbesondere wenn die Innenverkleidungsteile in Bezug auf die Rumpflängsrichtung zwischen den Spanten enden, kann die Verbindungsleiste in einfacher Weise, insbesondere ohne Platzprobleme angebracht werden.

Gemäß einer Ausführungsform sind das erste und das zweite Innenverkleidungsteil, wie oben beschrieben, jeweils mit einer ersten und einer zweiten Verbindungsstruktur ausgebildet, wobei die Verbindungsleiste mit der ersten Verbindungsstruktur des ersten Innenverkleidungsteils und mit der zweiten Verbindungsstruktur des zweiten Innenverkleidungsteils verbunden ist. Die Verbindungsleiste kann beispielsweise über eine Clipverbindung oder eine andere formschlüssige Verbindungsstruktur mit dem ersten und dem zweiten Innenverkleidungsteil verbunden sein. Optional ist die Verbindungsleiste profiliert ausgebildet bzw. weist einen profilierten Querschnitt auf, der komplementär zu der ersten und der zweiten Verbindungsstruktur aufgebaut ist. Damit wird die Montage der Innenverkleidungsteile erleichtert. Darüber hinaus wird die Abdichtung zum Rumpfinnenraum hin verbessert und damit der Bildung von Kondenswasser weiter vorgebeugt.

Weiterhin optional kann vorgesehen sein, dass die Verbindungsleise an einer von dem Rumpfinnenraum abgewandt orientierten Rückseite eine Isolationsschicht aufweist. Beispielsweise kann die Isolationsschicht als vakuumisolierte Struktur ausgebildet sein, wie dies voranstehend beschrieben wurde. Es sind aber auch andere Isolationsmaterialien denkbar. Durch die Isolation der Rückseite der Verbindungsleiste wird der Bildung einer Kältebrücke im Übergangsbereich zweiter Innenverkleidungsteile weiter entgegengewirkt.. Insbesondere wenn die Innenverkleidungsteile in Bezug auf die Rumpflängsrichtung zwischen den Spanten enden, wie voranstehend beschrieben, kann der zwischen den Spanten liegende Verbindungsbereich noch besser durch die Verbindungsleiste isoliert werden.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig. 1: eine Schnittansicht einer Rumpfstruktur gemäß einem Ausführungsbeispiel der Erfindung;
- Fig. 2: eine Detailansicht eines Innenverkleidungsteils gemäß einem Ausführungsbeispiel der Erfindung, wobei die Detailansicht sich in dem in der Fig. 1 durch den Buchstaben Z gekennzeichneten Bereich ergibt;
- Fig. 3: eine Schnittansicht eines Innenverkleidungsteils gemäß einem weiteren Ausführungsbeispiel der Erfindung;
- Fig. 4: eine Draufsicht auf eine Rumpfstruktur gemäß einem weiteren Ausführungsbeispiel der Erfindung;
- Fig. 5: eine Detailansicht einer Verbindung zweier Innenverkleidungsteile gemäß einem Ausführungsbeispiel der Erfindung;
- Fig. 6: eine Detailansicht einer Verbindung zweier Innenverkleidungsteile gemäß einem weiteren Ausführungsbeispiel der Erfindung;
- Fig. 7: eine Detailansicht einer Verbindung zweier Innenverkleidungsteile gemäß einem weiteren Ausführungsbeispiel der Erfindung; und
- Fig. 8: in Ansicht A eine Draufsicht auf eine Rumpfstruktur gemäß einem weiteren Ausführungsbeispiel der Erfindung und in Ansicht B eine Schnittdarstellung der Ansicht A.

In den Figuren bezeichnen dieselben Bezugszeichen gleiche oder funktionsgleiche Komponenten, soweit nichts Gegenteiliges angegeben ist.

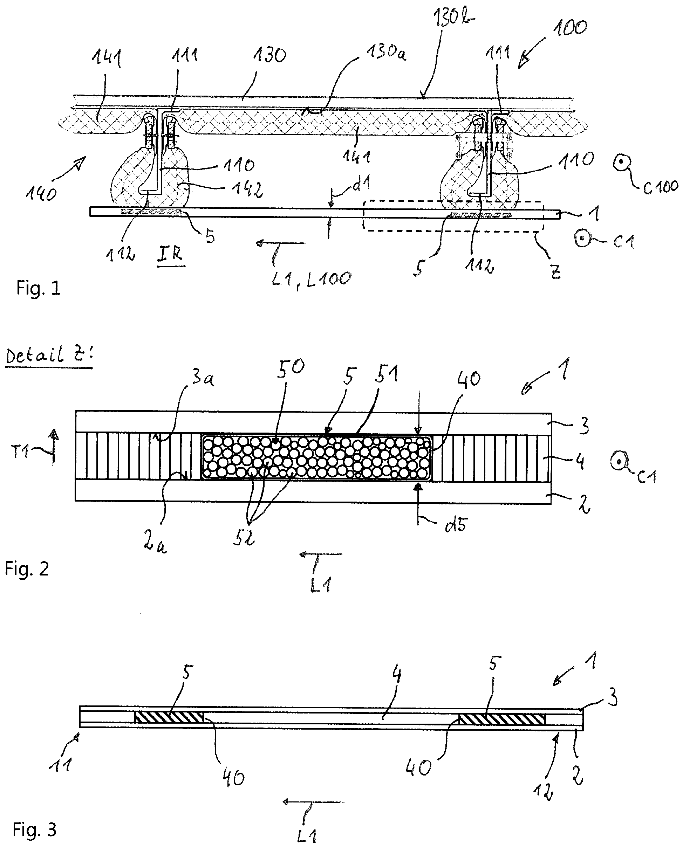

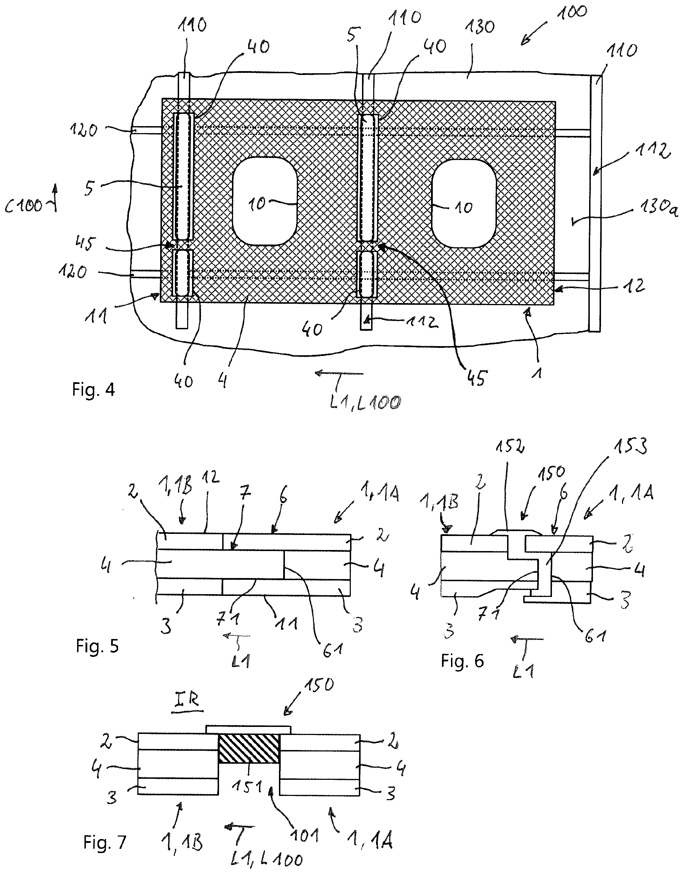

Fig. 1 zeigt beispielhaft und schematisch eine Schnittansicht einer Rumpfstruktur 100 eines Luftfahrzeugs, z.B. eines Passagierflugzeugs. Die beispielhaft dargestellte Rumpfstruktur 100 weist eine Vielzahl an Spanten 110, zumindest ein Innenverkleidungsteil 1, eine optionale Außenhaut 130 und eine optionale Primärisolierung 140 auf. Fig. 4 zeigt schematisch eine Draufsicht auf die Rumpfstruktur 100, wobei in Fig. 4 das Innenverkleidungsteil 1 in einer Teilschnittansicht dargestellt ist und die Primärisolierung 140 aus Gründen der Übersichtlichkeit nicht dargestellt ist. Wie in Fig. 4 erkennbar ist, weist die Rumpfstruktur 100 zusätzlich optionale Längsträger 120 auf.

Die Spanten 110 können insbesondere als Profilträger mit jeweils einem Spantfuß 111 und einem Spantkopf 112 realisiert sein. Wie in Fig. 1 beispielhaft dargestellt ist, können die Spanten 110 jeweils einen Z-förmigen Querschnitt aufweisen. Jeder Spant 110 bildet jeweils einen geschlossenen, beispielsweise kreisförmigen Rahmen. Die Spanten 110 erstrecken sich, wie in den Fign. 1 und 4 schematisch dargestellt, parallel zueinander und sind entlang einer Rumpflängsrichtung L100 beabstandet zueinander angeordnet. Die Spanten 110 definieren dadurch einen Rumpfinnenraum IR. Die Spanten 110 können beispielsweise aus einem faserverstärkten Kunststoffmaterial, insbesondere einem kohlefaserverstärkten Thermoplastmaterial, oder aus einem Metallmaterial, wie z.B. einer Titan- oder Aluminiumlegierung gebildet sein.

Die Längsträger 120 können ebenfalls als Profilträger, z.B. mit Ω-förmigem Querschnitt ausgebildet sein. Wie in Fig. 4 beispielhaft dargestellt ist erstrecken sich die Längsträger 120 entlang der Rumpflängsrichtung L100 und sind jeweils entlang einer Rumpfumfangsrichtung C100 zueinander beabstandet angeordnet. Auch die Längsträger 120 können sich beispielsweise parallel zueinander erstrecken. Die Längsträger 120 sind mit den Spanten 110 verbunden bzw. an diesen befestigt. Die Längsträger 120 und die Spanten 110 bilden gemeinsam eine Rumpf-Rahmenstruktur. Die Längsträger 120 können beispielsweise aus einem faserverstärkten Kunststoffmaterial, insbesondere einem kohlefaserverstärkten Thermoplastmaterial, oder aus einem Metallmaterial, wie z.B. einer Titan- oder Aluminiumlegierung gebildet sein

Die optionale Außenhaut 130 ist durch sich flächig erstreckende Hautsegmente oder- platten realisiert, welche an den Spantfüßen 111 befestigt sind. Die Außenhaut 130 weist eine den Spanten 110 bzw. dem Innenraum IR zugewandte Innenfläche 130a und eine entgegengesetzt zu dieser gelegene Außenfläche 130b auf. Die Außenfläche 130b bildet eine Außenfläche des Luftfahrzeugs, insbesondere eine Strömungsoberfläche.

Wie in Fig. 1 beispielhaft dargestellt ist, kann die optionale Primärisolierung 140 erste Isolationsmatten 141 und zweite Isolationsmatten 142 aufweisen. Die Isolationsmatten 141, 142 sind jeweils aus einem thermisch isolierenden Material gebildet, wie beispielsweise Glaswolle oder einer anderen Mineralwolle. Das isolierende Material der Isolationsmatten 141, 142 kann zum Schutz gegen Feuchtigkeit in einer Kunststoffhülle (nicht dargestellt) eingekapselt bzw. verpackt sein. Wie in Fig. 1 beispielhaft dargestellt, erstrecken sich die ersten Isolationsmatten 141 an der Innenfläche 130a der Außenhaut 141 zwischen zwei in der Rumpflängsrichtung L100 aufeinanderfolgenden Spanten 110 bzw. sind an der Außenhaut 130 angeordnet. Die ersten Isolationsmatten 141 können beispielsweise an den Spanten 110 befestigt sein, z.B. dort eingeklemmt sein. Die zweiten Isolationsmatten 142 erstrecken sich an einem Spant 110 jeweils an einer ersten Seite des Spants 110 vom Spantfuß 111 zum Spantkopf 112, über den Spantkopf 112 hinweg und an einer zweiten Seite des Spants 112 vom Spantkopf 112 zum Spantfuß 111. Somit überdecken die zweiten Isolationsmatten 142 den Spantkopf 112 eines jeweiligen Spants 110, wie dies in Fig. 1 beispielhaft dargestellt ist. Die zweiten Isolationsmatten 142 können beispielsweise mittels Bolzen an dem jeweiligen Spant 110 befestigt sein, wie dies in Fig. 1 schematisch dargestellt ist.

Fig. 2 zeigt beispielhaft und schematisch eine Schnittansicht des Innenverkleidungsteils 1. Das Innenverkleidungsteil 1 weist eine erste Deckschicht 2, eine zweite Deckschicht 3, eine Kernschicht 4, z.B. in Form einer Wabenstruktur, und eine Isolationsstruktur 5 auf.

Die Deckschichten 2, 3 sind jeweils als sich flächig erstreckende, beispielsweise platten- oder schalenförmige Bauteile realisiert. Insbesondere erstrecken sich die Deckschichten 2, 3 jeweils entlang einer Verkleidungsteillängsrichtung L1 und entlang einer Verkleidungsteilumfangsrichtung C1. Die Deckschichten 2, 3 sind in einer Verkleidungsteildickenrichtung T1, die sich quer zur Verkleidungsteillängsrichtung L1 und zur Verkleidungsteilumfangsrichtung C1 erstreckt, beabstandet zueinander angeordnet. Die Deckschichten 2, 3 können insbesondere aus einem faserverstärkten Kunststoffmaterial gebildet sein, z.B. einem glasfaserverstärkten Duroplastmaterial.

Die Kernschicht 4 ist in Fig. 2 lediglich schematisch dargestellt und kann beispielsweise als Wabenstruktur 4 mit einer Vielzahl von Stegen ausgeführt sein, wobei die Stege gemeinsam eine Vielzahl einzelner Waben, z.B. hexagonaler, rechteckiger oder allgemein polygonaler Waben bilden. Die die Waben bildenden Stege können beispielsweise aus Pappe bzw. harzgetränkten Naturfasern oder einem Kunststoff, insbesondere einem faserverstärkten Kunststoffmaterial gebildet sein. Die Kernschicht 4 ist in Bezug auf die Verkleidungsteildickenrichtung T1 zwischen der ersten und der zweiten Deckschicht 2, 3 angeordnet und erstreckt sich flächig zwischen den Deckschichten 2, 3. Insbesondere ist die Kernschicht 4 mit einer der zweiten Deckschicht 3 zugewandten ersten Innenfläche 2a der ersten Deckschicht 2 und einer der ersten Deckschicht 2 zugewandten zweiten Innenfläche 3a der zweiten Deckschicht 3 verbunden, insbesondere verklebt. Somit wird ein sandwichförmig aufgebautes Innenverkleidungsteil 1 realisiert.

Wie in Fig. 2 und in Fig. 4 erkennbar, in welcher die erste Deckschicht 2 weggelassen ist, weist die Kernschicht 4 eine Ausnehmung auf, welche einen Aufnahmehohlraum 40 definiert. Die Ausnehmung weist insbesondere eine flächige Erstreckung auf, die gegebenenfalls größer als die flächige Erstreckung einzelner Waben einer Wabenstruktur ist. Wie in Fig. 2 beispielhaft dargestellt ist, kann der Aufnahmehohlraum 40 insbesondere als kernschichtfreier Hohlraum realisiert sein, welcher sich zwischen der ersten Innenfläche 2a der ersten Deckschicht 2 und zweiten Innenfläche 3a der zweiten Deckschicht 3 erstreckt. Insbesondere kann der Aufnahmehohlraum 40 somit in Bezug auf die Verkleidungsteildickenrichtung T durch die Innenflächen 2a, 3a der Deckschichten 2, 3 begrenzt sein, wobei zwischen den Innenflächen 2a, 3a im Bereiche des Aufnahmehohlraums 40 kein Material der Kernschicht 4 vorhanden ist.

Wie insbesondere in den Fign. 3 und 4 schematisch dargestellt ist, können mehrere in Bezug auf die Verkleidungsteillängsrichtung L1 beabstandet zueinander angeordnete, sich optional parallel erstreckende Aufnahmehohlräume 40 vorgesehen sein. Wie in Fig. 4 beispielhaft dargestellt ist, können die Aufnahmehohlräume 40 sich jeweils streifenförmig entlang der Verkleidungsteilumfangsrichtung C1 erstrecken. Wie in Fig. 4 außerdem erkennbar, kann vorgesehen sein, dass auch in der Verkleidungsteilumfangsrichtung C1 zueinander beabstandet mehrere, beispielsweise zwei Aufnahmehohlräume 40 vorgesehen sind, welche durch einen sich in der Verkleidungsteillängsrichtung L1 und der Verkleidungsteilumfangsrichtung C1 erstreckenden Steg 45 der Kernschicht 4 voneinander getrennt sind. Der optionale Steg 45 verbessert die mechanische Festigkeit des Innenverkleidungsteils 1. Wie in Fig. 4 außerdem erkennbar ist, kann das Innenverkleidungsteil 1 eine oder mehrere Durchgangsöffnungen 10 aufweisen, welche sich durch die Deckschichten 2, 3 und die Kernschicht 4 hindurch erstreckt und als Fensteröffnung dient.

Die Isolationsstruktur 5 ist in Fig. 2 beispielhaft und schematisch im Detail dargestellt. Die Isolationsstruktur 5 weist einen Isolationskern 50 und eine Folienhülle 51 auf. Der Isolationskern 50 ist aus einem porösen, thermisch isolierenden Material gebildet. Insbesondere kann der Isolationskern 50 durch ein pulverförmiges Material 52 aus einem Feststoff, wie beispielsweise Aerosil ® gebildet sein. In Fig. 2 ist die Partikelgröße der einzelnen Partikel des pulverförmigen Materials 52 des Isolationskerns 50 nicht maßstabsgetreu dargestellt. Die Folienhülle 51 ist aus einem gasdichten Material, beispielsweise einem Kunststoffmaterial, welches optional mit einem Metallmaterial beschichtet ist. Die Folienhülle 51 umschließt bzw. ummantelt den Isolationskern 50 komplett, so dass der Isolationskern 50 gasdicht in der Folienhülle 51 eingeschlossen ist. Die Folienhülle 51 ist außerdem evakuiert, das heißt, dem Inneren der Folienhülle 51 mit dem Isolationskern 50 ist die Luft entzogen. Insbesondere kann ein Druck im Inneren der Folienhülle 51 kleiner oder gleich 1 % des Umgebungsdrucks, insbesondere kleiner oder gleich 0,5 % des Umgebungsdrucks betragen.

Wie in Fig. 2 schematisch dargestellt, ist die Isolationsstruktur 5 in dem Aufnahmehohlraum 40 zwischen der ersten und der zweiten Deckschicht 2, 3 angeordnet und damit in Bezug auf die Verkleidungsteildickenrichtung T in den Querschnitt des Innenverkleidungsteils 1 integriert. Optional ist die Folienhülle 51 der Isolationsstruktur 5 mit der ersten Innenfläche 2a und mit der zweiten Innenfläche 3a verbunden, beispielsweise verklebt, wie dies in Fig. 2 schematisch angedeutet ist. Die Isolationsstruktur 5 kann insbesondere eine Dicke d5 in einem Bereich zwischen 3 mm und 11 mm in Bezug auf die Verkleidungsteildickenrichtung T aufweisen. Wie in Fig. 4 erkennbar ist, kann in jedem der Aufnahmehohlräume 40 eines Innenverkleidungsteils 1 jeweils eine Isolationsstruktur 5 angeordnet sein. Es ist auch denkbar, dassje Aufnahmehohlraum 40 mehrere flächig nacheinander bzw. nebeneinander angeordnete Isolationsstrukturen 5 vorgesehen sind.

Wie in den Fign. 1 und 4 schematisch dargestellt ist, erstreckt sich das Innenverkleidungsteil 1 mit der Verkleidungsteillängsrichtung L1 entlang der Rumpflängsrichtung L100. Das Innenverkleidungsteil 1 ist in dem Rumpfinnenraum IR angeordnet, wobei die zweite Deckschicht 3 den Spanten 110 bzw. dem Spantkopf 112 zugewandt orientiert ist. Wie insbesondere in Fig. 4 dargestellt ist, überlappt das Innenverkleidungsteil 1 in Bezug auf die Rumpflängsrichtung L100 mit zumindest einem Spant 110 und kann beispielsweise an dem Spant 110 und/oder an einem Längsträger 120 befestigt sein. In Fig. 4 ist beispielhaft dargestellt, dass das Innenverkleidungsteil 1 mit zwei in der Rumpflängsrichtung L100 aufeinanderfolgenden Spanten 110 überlappt. Bei der in Fig. 4 beispielhaft dargestellten Rumpfstruktur 100 ist ein erster Endbereich 11 des Innenverkleidungsteils 1 zwischen zwei in der Rumpflängsrichtung L100 aufeinanderfolgenden Spanten 110 angeordnet und ein in Bezug auf die Verkleidungsteillängsrichtung L1 entgegengesetzt zu dem ersten Endbereich 11 gelegener zweiter Endbereich 12 ist ebenfalls zwischen zwei in der Rumpflängsrichtung L100 aufeinanderfolgenden Spanten 110 angeordnet. Allgemein kann vorgesehen sein, dass ein Endbereich 11, 12 des Innenverkleidungsteils 1 jeweils zwischen zwei in der Rumpflängsrichtung L100 aufeinanderfolgenden Spanten 110 angeordnet ist.

Wie in Fig. 4 außerdem dargestellt ist, ist die Isolationsstruktur 5 des Innenverkleidungsteils 1 in Bezug auf die Rumpflängsrichtung L100 überlappend mit dem Spant 110 angeordnet. Das heißt, wie in Fig. 4 erkennbar, sind jeweils ein Spant 110 und eine Isolationsstruktur 5 des Innenverkleidungsteils 1 in Bezug auf die Rumpflängsrichtung L100 an derselben Position angeordnet. Damit wird die thermische Isolierung der Rumpfstruktur 100 durch die in den Querschnitt des Innenverkleidungsteils 1 integrierte Isolationsstruktur 5 zumindest im Bereich der Spanten 110 verbessert. Wie in Fig. 1 erkennbar ist, weißt das Innenverkleidungsteil 1 bei verbesserter Isolationswirkung eine relativ geringe Dicke d1 auf, da die Isolationsstruktur 5 zwischen den Deckschichten 2, 3 in einem durch die Kernschicht 4 definierten Hohlraum 40 angeordnet ist. Somit kann das Platzangebot des Rumpfinnenraums IR bei guter thermischer Isolierung im Bereich der Spante noch effizienter ausgenutzt werden.

In Fig. 4 ist aus Gründen der Übersichtlichkeit lediglich ein Innenverkleidungsteil 1 dargestellt. Selbstverständlich kann vorgesehen sein, dass mehrere Innenverkleidungsteile 1 in der Rumpflängsrichtung L100 nacheinander angeordnet sind. Die zwei in der Rumpflängsrichtung L100 aufeinander folgende Innenverkleidungsteile 1 sind jeweils an einem Stoß miteinander verbunden. Die Fign. 5 bis 7 zeigen jeweils beispielhaft mögliche Verbindungen zwischen einem ersten Innenverkleidungsteil 1A und einem in der Rumpflängsrichtung folgenden zweiten Innenverkleidungsteil 1B.

In Fig. 5 ist beispielhaft dargestellt, dass das erste Innenverkleidungsteil 1A an einem dem zweiten Innenverkleidungsteil 1B zugewandten Endbereich 11 eine Nut 61 aufweist, die durch die gegenüber der Kernschicht 4 in der Verbindungsteillängsrichtung L1 vorspringenden Deckschichten 2, 3 gebildet ist. Das zweite Innenverkleidungsteil 1B weist an einem dem ersten Innenverkleidungsteil 1A zugewandten Endbereich 12 eine Feder 71 auf, die durch die gegenüber den Deckschichten 2, 3 in der Verbindungsteillängsrichtung L1 vorspringende Kernschicht 4 gebildet ist. Wie in Fig. 5 beispielhaft dargestellt, greift die Feder 71 in die Nut 61. Optional kann das erste Innenverkleidungsteil 1A an einem entgegengesetzt gelegenen Endbereich 12 eine Feder (nicht dargestellt) aufweisen und das zweite Innenverkleidungsteil an einem entgegengesetzt gelegenen Endbereich 11 eine Nut (nicht dargestellt). Allgemein kann ein erster Endbereich 11 des Innenverkleidungsteils 1 eine erste Verbindungsstruktur 6 und ein in Bezug auf die Verbindungsteillängsrichtung L1 entgegengesetzt zu dem ersten Endbereich gelegener zweiter Endbereich 12 des Innenverkleidungsteils 1 eine zweite Verbindungsstruktur 7 bilden. Die Verbindungsstrukturen 6, 7 können optional komplementär zueinander ausgebildet sein. Allgemein können die Verbindungsstrukturen 6, 7 profiliert sein bzw. einen profilierten Querschnitt definieren.

In den Fign. 6 und 7 ist beispielhaft dargestellt, dass die Innenverkleidungsteile 1A, 1B durch eine Verbindungsleiste 150, welche zumindest teilweise zwischen den Innenverkleidungsteilen 1A, 1B angeordnet ist, verbunden sind. In Fig. 6 weist die erste Verbindungsstruktur 6 des ersten Innenverkleidungsteils 1A wiederum eine Nut 61 auf. Im Unterschied zu Fig. 5 ist diese als sich entlang der Verkleidungsteillängsrichtung L1 erstreckende Vertiefung der zweiten Deckschicht 3 und der Kernschicht 4 gebildet. Es ist auch denkbar, die Nut 61 durch eine Vertiefung der Kernschicht 4 zu bilden. Allgemein kann die erste Verbindungsstruktur 6 eine Nut 61 aufweisen. Die zweite Verbindungsstruktur 7 des zweiten Innenverkleidungsteils 1B weist eine Feder 71 bzw. einen Vorsprung auf, welcher in Fig. 6 durch die zweite Deckschicht 3 und die Kernschicht 4 gebildet ist, welche jeweils gegenüber der ersten Deckschicht 2 in der Verbindungsteillängsrichtung L1 vorspringen. Es sind auch andere Konfigurationen denkbar, welche die zweite Verbindungsstruktur 7 als Feder 71 realisieren. Wie in Fig. 6 außerdem beispielhaft dargestellt ist, weist die zweite Deckschicht 3 des zweiten Innenverkleidungsteils 1B im Bereich der Verbindungsstruktur 7 eine verringerte Dicke auf. Die Verbindungsleiste 150 weist eine überlappend mit der ersten Deckschicht 2 des ersten und des zweiten Verbindungsteils 1A, 1B angeordnete Kappe 152 und einen mit der Kappe 152 verbundenen Stegabschnitt 153 auf, welcher zwischen dem ersten Innenverkleidungsteil 1A und dem zweiten Innenverkleidungsteil 1B angeordnet ist. Der Stegabschnitt 153 weist einen jeweils komplementär zu der ersten Verbindungsstruktur 6 des ersten Innenverkleidungsteils 1A und zu der zweiten Verbindungsstruktur 7 des zweiten Innenverkleidungsteils 1B geformten Querschnitt auf. Allgemein ist die Verbindungsleiste 150 mit der ersten Verbindungsstruktur 6 des ersten Innenverkleidungsteils 1A und mit der zweiten Verbindungsstruktur 7 des zweiten Innenverkleidungsteils 1B verbunden, beispielsweise formschlüssig verbunden.

Wie in Fig. 7 gezeigt ist, kann die Verbindungsleiste 150 auch als einfache Abdeckleiste ausgebildet sein, welche einen in Bezug auf die Rumpflängsrichtung L100 zwischen den Innenverkleidungsteilen 1A, 1B gebildeten Spalt 101 abdeckt. Wie in Fig. 7 beispielhaft gezeigt, kann die Verbindungsleiste 150 jeweils überlappend mit der ersten Deckschicht 2 des ersten und des zweiten Verbindungsteils 1A, 1B angeordnet sein. Die Verbindungsleiste 150 kann beispielsweise über eine Clipverbindung (nicht dargestellt) oder eine andere formschlüssige Verbindung mit den Deckschichten 2 verbunden sein. Allgemein ist die Verbindungsleiste 150 mit der ersten Verbindungsstruktur 6 des ersten Innenverkleidungsteils 1A und mit der zweiten Verbindungsstruktur 7 des zweiten Innenverkleidungsteils 1B verbunden. Weiterhin optional kann an einer von dem Rumpfinnenraum IR abgewandt orientierten Rückseite der Verbindungsleiste 150 eine Isolationsschicht 151, z.B. in Form einer Isolationsstruktur 5, wie sie voranstehend beschrieben wurde, vorgesehen sein. Die Isolationsstruktur 5 kann hierbei beispielsweise zwischen der Verbindungsleiste 150 und einer Abdecklage (nicht dargestellt) angeordnet sein, wobei die Abdecklage insbesondere durch eine stoffschlüssig mit der Abdecklage verbundene faserverstärkte Matte gebildet sein kann.

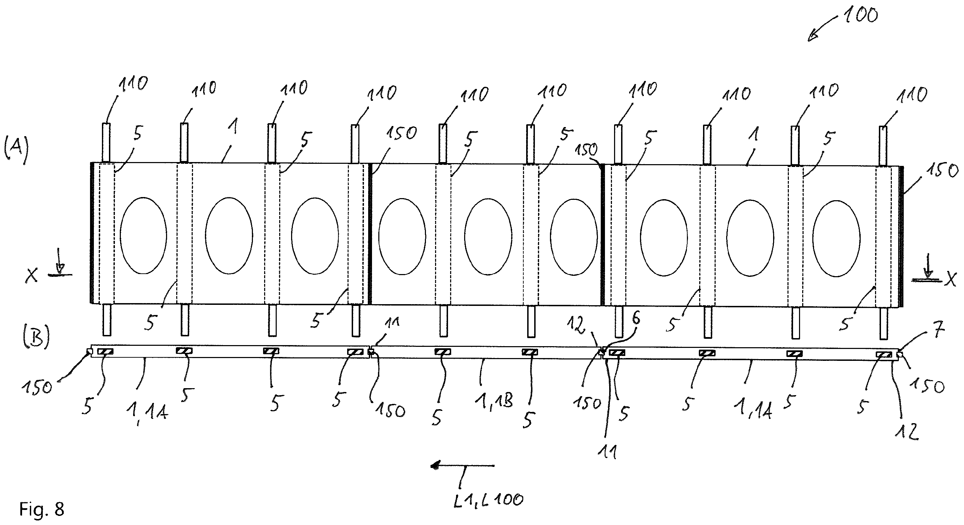

Fig. 8 zeigt beispielhaft eine weitere Rumpfstruktur 100, wobei in Ansicht A von Fig. 8 eine Draufsicht auf die Rumpfstruktur 100 und in Ansicht B von Fig. 8 eine Schnittdarstellung der in Ansicht A dargestellten Rumpfstruktur 100 schematisch gezeigt ist. Die in Ansicht B von Fig. 8 gezeigte Schnittdarstellung ergibt sich bei einem Schnitt entlang der Linie X-X, wie sie in Ansicht A von Fig. 8 eingezeichnet ist. Im Unterschied zu Fig. 4 überlappt ein erstes Innenverkleidungsteil 1A in Bezug auf die Rumpflängsrichtung L100 insgesamt vier Spanten 110 und erstreckt sich somit über zumindest drei Spantfelder, welche jeweils zwischen zwei in Rumpflängsrichtung L100 aufeinander folgenden Spanten 110 gebildet sind. Ein zweites Innenverkleidungsteil 1B, welches in der Rumpflängsrichtung L100 auf das erste Innenverkleidungsteil 1A folgt, überlappt zwei in der Rumpflängsrichtung L100 aufeinander folgende Spanten 110. Damit überdeckt das zweite Innenverkleidungsteil 1B ein Spantfeld insgesamt sowie zwei weitere Spantfelder teilweise. Wie in Fig. 8 deutlich erkennbar ist, enden sowohl das erste als auch das zweite Innenverkleidungsteil 1A, 1B jeweils knapp neben einem Spant 110. Allgemein kann vorgesehen sein, dass ein Endbereich 11, 12 des Innenverkleidungsteils 1 jeweils zwischen zwei in der Rumpflängsrichtung L100 aufeinanderfolgenden Spanten 110 angeordnet ist. Durch diese Anordnung wird die Anzahl der Innenverkleidungsteile 1 insgesamt gegenüber der in Fig. 4 beispielhaft gezeigten Anordnung verringert, die notwendig ist, um eine vorgegebene Anzahl an Spantfeldern abzudecken.

Das erste und das zweite Innenverkleidungsteil 1A, 1B weisen jeweils in den Querschnitt integrierte Isolationsstrukturen 5 auf, wie dies z.B. in Fig. 2 gezeigt ist und voranstehend im Detail erläutert wurde. Wie in Fig. 8 weiterhin beispielhaft dargestellt ist, sind die Isolationsstrukturen 5 in Bezug auf die Rumpflängsrichtung L100 jeweils korrespondierend zu der Position der Spanten 110 angeordnet.

Ferner zeigt Fig. 8, dass das erste und das zweite Innenverkleidungsteil 1A, 1B jeweils durch eine Verbindungsleiste 150 verbunden sind. Diese ist in Fig. 8 in Ansicht B beispielhaft lediglich als Steg mit rechteckförmigen Querschnitt dargestellt, welcher in als Nuten realisierte Verbindungsstrukturen 6, 7 der Innenverkleidungsteile 1A, 1B eingreift bzw. in diese eingesetzt ist. In der in Fig. 8 beispielhaft dargestellten Rumpfstruktur 100, in welcher die Anzahl der Innenverkleidungsteile 1 reduziert ist, ist folglich auch die Anzahl der Verbindungsleisten 150 bzw. allgemein der Verbindungsbereiche, in welchen zwei Innenverkleidungsteile 1A, 1B verbunden sind, verringert. Dies führt zu einer verbesserten akustischen und thermischen Isolation des Innenraums IR. Ferner wird durch die Anordnung der Endbereiche 11, 12 der Innenverkleidungsteile 1 zwischen den Spanten 110 eine zusätzliche thermische Isolierung der Verbindungsbereiche erleichtert, z.B. durch die Anbringung einer Isolationsschicht 151 an der Verbindungsleiste, wie in Fig. 7 beispielhaft gezeigt, oder durch Anbringung zusätzlicher Primärisolierung zwischen den Innenverkleidungsteilen 1 und der Außenhaut 130.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1: Innenverkleidungsteil
- 2: erste Deckschicht
- 2a: erste Innenfläche
- 3: zweite Deckschicht
- 3a: zweite Innenfläche
- 4: Kernschicht
- 5: Isolationsstruktur
- 6: erste Verbindungsstruktur
- 7: zweite Verbindungsstruktur
- 10: Durchgangsöffnungen
- 11: erster Endbereich des Innenverkleidungsteils
- 12: zweiter Endbereich des Innenverkleidungsteils
- 40: Aufnahmehohlraum
- 45: Steg
- 50: Isolationskern
- 51: Folienhülle
- 52: Pulver
- 61: Nut
- 71: Feder
- 100: Rumpfstruktur
- 101: Spalt
- 110: Spant
- 111: Spantfuß
- 112: Spantkopf
- 120: Längsträger
- 130: Außenhaut
- 130a: Innenfläche der Außenhaut
- 130b: Außenfläche der Außenhaut
- 140: Primärisolierung
- 141: erste Isolationsmatten
- 142: zweite Isolationsmatten
- 150: Verbindungsleiste
- 151: Isolationsschicht
- 152: Kappe
- 153: Stegabschnitt
- C1: Verkleidungsteilumfangsrichtung
- C100: Rumpfumfangsrichtung
- d5: Dicke
- IR: Rumpfinnenraum
- L1: Verkleidungsteillängsrichtung
- L100: Rumpflängsrichtung
- T1: Verkleidungsteildickenrichtung

## Patentansprüche

1. Innenverkleidungsteil (1) zur Verkleidung einer Rumpfstruktur (100) eines Luftfahrzeugs, mit:
einer sich flächig erstreckenden ersten Deckschicht (2);
einer sich flächig erstreckenden zweiten Deckschicht (3);
einer zwischen der ersten und der zweiten Deckschicht (2; 3) angeordneten und mit der ersten und der zweiten Deckschicht (2; 3) verbundenen Kernschicht (4), welche einen Aufnahmehohlraum (40) definiert; und
einer Isolationsstruktur (5) mit einem porösen Isolationskern (50) und einer den Isolationskern (50) gasdicht ummantelnden, evakuierten Folienhülle (51);
wobei die Isolationsstruktur (5) in dem Aufnahmehohlraum (40) zwischen der ersten und der zweiten Deckschicht (2; 3) angeordnet ist.

2. Innenverkleidungsteil (1) nach Anspruch 1, wobei der Aufnahmehohlraum (40) kernschichtfrei ist und sich zwischen einer der zweiten Deckschicht (3) zugewandten ersten Innenfläche (2a) der ersten Deckschicht (2) und einer der ersten Deckschicht (2) zugewandten zweiten Innenfläche (3a) der zweiten Deckschicht (3) erstreckt, und wobei die Folienhülle (51) der Isolationsstruktur (5) mit der ersten Innenfläche (2a) und mit der zweiten Innenfläche (3a) verbunden, insbesondere verklebt ist.

3. Innenverkleidungsteil (1) nach Anspruch 1 oder 2, wobei der poröse Isolationskern (50) durch ein pulverförmiges Material (52), insbesondere eine pyrogene Kieselsäure gebildet ist.

4. Innenverkleidungsteil (1) nach einem der voranstehenden Ansprüche, wobei die Isolationsstruktur (5) mit einer Dicke (d5) in einem Bereich zwischen 3 mm und 11 mm zwischen der ersten und der zweiten Deckschicht (2; 3) erstreckt.

5. Innenverkleidungsteil (1) nach einem der voranstehenden Ansprüche, wobei die erste Deckschicht (2) und die zweite Deckschicht (3) jeweils aus einem faserverstärkten Kunststoffmaterial gebildet sind.

6. Innenverkleidungsteil (1) nach einem der voranstehenden Ansprüche, wobei die Kernschicht (4) den Aufnahmehohlraum (40) in Form eines länglichen Streifens definiert.

7. Innenverkleidungsteil (1) nach einem der voranstehenden Ansprüche, wobei die Kernschicht (4) zumindest zwei Aufnahmehohlräume (40) definiert, welche entlang einer Verkleidungsteillängsrichtung (L1) beabstandet angeordnet sind und sich parallel zueinander erstrecken, und wobei in jedem Aufnahmebereich (40) eine Isolationsstruktur (5) angeordnet ist.

8. Innenverkleidungsteil (1) nach einem der voranstehenden Ansprüche, wobei ein erster Endbereich (11) des Innenverkleidungsteils (1) eine erste Verbindungsstruktur (6) bildet, und wobei ein entgegengesetzt zu dem ersten Endbereich gelegener zweiter Endbereich (12) des Innenverkleidungsteils (1) eine zweite Verbindungsstruktur (7) bildet.

9. Innenverkleidungsteil (1) nach Anspruch 8, wobei die erste Verbindungsstruktur (6) eine Nut (61) und die zweite Verbindungsstruktur (7) eine Feder (71) aufweist.

10. Rumpfstruktur (100) für ein Luftfahrzeug, mit:
einer Vielzahl von Spanten (110), welche entlang einer Rumpflängsrichtung (L100) beabstandet zueinander angeordnet sind und einen Rumpfinnenraum (IR) definieren;
einem Innenverkleidungsteil (1) gemäß einem der voranstehenden Ansprüche, welches in Bezug auf die Rumpflängsrichtung (L100) mit zumindest einem Spant (110) überlappend in dem Rumpfinnenraum (IR) angeordnet ist;
wobei die Isolationsstruktur (5) des Innenverkleidungsteils (1) in Bezug auf die Rumpflängsrichtung (L100) überlappend mit dem Spant (110) angeordnet ist.

11. Rumpfstruktur (100) nach Anspruch 10, zusätzlich aufweisend:
eine flächige Außenhaut (130), welche an Spantfüßen (111) der Spanten (110) befestigt ist;
eine Primärisolierung (140) mit ersten Isolationsmatten (141), die an einer dem Rumpfinnenraum (IR) zugewandten Innenfläche (130a) der Außenhaut (130) zwischen zwei in der Rumpflängsrichtung (L100) aufeinanderfolgenden Spanten (110) angeordnet sind, und mit zweiten Isolationsmatten (142), welche jeweils einen dem Innenraum (IR) zugewandten Spantkopf (112) eines jeweiligen Spants (110) überdecken.

12. Rumpfstruktur (100) nach einem der Ansprüche 10 oder 11, wobei ein Endbereich (11; 12) des Innenverkleidungsteils jeweils zwischen zwei in der Rumpflängsrichtung (L100) aufeinanderfolgenden Spanten (110) angeordnet ist.

13. Rumpfstruktur (100) nach einem der Ansprüche 10 bis 12, wobei mehrere Innenverkleidungsteile (1) in der Rumpflängsrichtung (L100) nacheinander angeordnet sind, und wobei an einem Stoß zwischen einem ersten Innenverkleidungsteil (1A) und einem in der Rumpflängsrichtung (L100) folgenden zweiten Innenverkleidungsteil (1B) eine Verbindungsleiste (150) angeordnet ist.

14. Rumpfstruktur (100) nach Anspruch 13, wobei das erste und das zweite Innenverkleidungsteil (1A, 1B) nach Anspruch 8 oder 9 ausgebildet sind, und wobei die Verbindungsleiste (150) mit der ersten Verbindungsstruktur (6) des ersten Innenverkleidungsteils (1A) und mit der zweiten Verbindungsstruktur (7) des zweiten Innenverkleidungsteils (1B) verbunden ist.

15. Rumpfstruktur (100) nach Anspruch 13 oder 14, wobei die Verbindungsleise (150) an einer von dem Rumpfinnenraum (IR) abgewandt orientierten Rückseite eine Isolationsschicht (151) aufweist.

## Claims

1. Internal cladding part (1) for cladding a fuselage structure (100) of an aircraft, having:
a first cover layer (2) that extends in a planar manner;
a second cover layer (3) that extends in a planar manner;
a core layer (4) which is disposed between the first and the second cover layer (2; 3) and is connected to the first and the second cover layer (2; 3) and defines a receptacle cavity (40); and
an insulation structure (5) having a porous insulation core (50) and an evacuated film sheath (51) that encases the insulation core (50) in a gas-tight manner;
wherein the insulation structure (5) is disposed in the receptacle cavity (40) between the first and the second cover layer (2; 3).

2. Internal cladding part (1) according to Claim 1, wherein the receptacle cavity (40) is free of a core layer and extends between a first internal face (2a) of the first cover layer (2) that faces the second cover layer (3) and a second internal face (3a) of the second cover layer (3) that faces the first cover layer (2), and wherein the film sheath (51) of the insulation structure (5) is connected, in particular adhesively bonded, to the first internal face (2a) and to the second internal face (3a).

3. Internal cladding part (1) according to Claim 1 or 2, wherein the porous insulation core (50) is formed by a pulverulent material (52), in particular a pyrogenic silica.

4. Internal cladding part (1) according to one of the preceding claims, wherein the insulation structure (5) having a thickness (d5) in a range between 3 mm and 11 mm extends between the first and the second cover layer (2; 3).

5. Internal cladding part (1) according to one of the preceding claims, wherein the first cover layer (2) and the second cover layer (3) are in each case formed from a fiber-reinforced plastics material.

6. Internal cladding part (1) according to one of the preceding claims, wherein the core layer (4) defines the receptacle cavity (40) in the form of an elongate strip.

7. Internal cladding part (1) according to one of the preceding claims, wherein the core layer (4) defines at least two receptacle cavities (40) which are disposed so as to be spaced apart along a cladding part longitudinal direction (L1) and extend so as to be mutually parallel, and wherein one insulation structure (5) is disposed in each receptacle region (40) .

8. Internal cladding part (1) according to one of the preceding claims, wherein a first end region (11) of the internal cladding part (1) forms a first connection structure (6), and wherein a second end region (12) of the internal cladding part (1) that lies opposite the first end region forms a second connection structure (7).

9. Internal cladding part (1) according to Claim 8, wherein the first connection structure (6) has a groove (61), and the second connection structure (7) has a tongue (71) .

10. Fuselage structure (100) for an aircraft, having:
a multiplicity of formers (110) which are disposed so as to be mutually spaced apart along a fuselage longitudinal direction (L100) and define a fuselage interior space (IR);
an internal cladding part (1) according to one of the preceding claims which in terms of the fuselage longitudinal direction (L100) is disposed in the fuselage interior space (IR) so as to overlap with at least one former (110);
wherein the insulation structure (5) of the internal cladding part (1) in terms of the fuselage longitudinal direction (L100) is disposed so as to overlap with the former (110).

11. Fuselage structure (100) according to Claim 10, additionally having:
a planar external skin (130) which is fastened to former bases (111) of the formers (110);
a primary insulation (140) having first insulation mats (141) which are disposed on an internal face (130a) of the external skin (130) that faces the fuselage interior space (IR), between two formers (110) which are successive in the fuselage longitudinal direction (L100), and having second insulation mats (142) which cover in each case one former head (112) of a respective former (110) that faces the interior space (IR).

12. Fuselage structure (100) according to one of Claims 10 or 11, wherein an end region (11; 12) of the internal cladding part is in each case disposed between two formers (110) which are successive in the fuselage longitudinal direction (L100).

13. Fuselage structure (100) according to one of Claims 10 to 12, wherein a plurality of internal cladding parts (1) are disposed in succession in the fuselage longitudinal direction (L100), and wherein a connecting strip (150) is disposed on a joint between a first internal cladding part (1A) and a second internal cladding part (1B) which is successive in the fuselage longitudinal direction (L100) .

14. Fuselage structure (100) according to Claim 13, wherein the first and the second internal cladding part (1A, 1B) are configured according to Claim 8 or 9, and wherein the connecting strip (150) is connected to the first connection structure (6) of the first internal cladding part (1A) and to the second connection structure (7) of the second internal cladding part (1B).

15. Fuselage structure (100) according to Claim 13 or 14, wherein the connecting strip (150) on a rear side that is oriented so as to face away from the fuselage interior space (IR) has an insulation layer (151) .

## Revendications

1. Élément de revêtement intérieur (1) destiné au revêtement d'une structure de fuselage (100) d'un aéronef, ledit élément comprenant :
une première couche de recouvrement (2) s'étendant de manière sensiblement bidimensionnelle ;
une deuxième couche de recouvrement (3) s'étendant de manière sensiblement bidimensionnelle ;
une couche centrale (4) qui est disposée entre la première et la deuxième couche de recouvrement (2 ; 3), qui est reliée à la première et à la deuxième couche de recouvrement (2 ; 3) et qui définit une cavité de réception (40) ; et
une structure isolante (5) comprenant un noyau isolant poreux (50) et un film d'enveloppe (51) mis sous vide et gainant le noyau isolant (50) de manière étanche aux gaz ;
la structure isolante (5) étant disposée dans la cavité de réception (40) entre la première et la deuxième couche de recouvrement (2 ; 3).

2. Élément de revêtement intérieur (1) selon la revendication 1, la cavité de réception (40) étant dépourvue d'une couche centrale et s'étendant entre une première surface intérieure (2a), dirigée vers la deuxième couche de recouvrement (3), de la première couche de recouvrement (2) et une deuxième surface intérieure (3a), dirigée vers la première couche de recouvrement (2), de la deuxième couche de recouvrement (3) et le film d'enveloppe (51) de la structure isolante (5) étant relié, en particulier collé, à la première surface intérieure (2a) et à la deuxième surface intérieure (3a).

3. Élément de revêtement intérieur (1) selon la revendication 1 ou 2, le noyau isolant poreux (50) étant formé par un matériau pulvérulent (52), notamment un acide silicique pyrogéné.

4. Élément de revêtement intérieur (1) selon l'une des revendications précédentes, la structure isolante (5) s'étendant avec une épaisseur (d5) dans une gamme comprise entre 3 mm et 11 mm entre la première et la deuxième couche de recouvrement (2 ; 3).

5. Élément de revêtement intérieur (1) selon l'une des revendications précédentes, la première couche de revêtement (2) et la deuxième couche de revêtement (3) étant chacune formées d'une matière synthétique renforcée de fibres.

6. Élément de revêtement intérieur (1) selon l'une des revendications précédentes, la couche centrale (4) définissant la cavité de réception (40) sous la forme d'une bande allongée.

7. Élément de revêtement intérieur (1) selon l'une des revendications précédentes, la couche centrale (4) définissant au moins deux cavités de réception (40) qui sont disposées à distance suivant une direction longitudinale (L1) de l'élément de revêtement et s'étendent parallèlement l'une à l'autre, et une structure d'isolation (5) étant disposée dans chaque zone de réception (40).

8. Élément de revêtement intérieur (1) selon l'une des revendications précédentes, une première zone d'extrémité (11) de l'élément de revêtement intérieur (1) formant une première structure de liaison (6), et une deuxième zone d'extrémité (12), opposée à la première zone d'extrémité, de la partie de revêtement intérieur (1) formant une deuxième structure de liaison (7) .

9. Élément de revêtement intérieur (1) selon la revendication 8, la première structure de liaison (6) comportant une rainure (61) et la deuxième structure de liaison (7) comportant une languette (71).

10. Structure de fuselage (100) destinée à un aéronef, ladite structure comprenant :
un grand nombre de membrures (110) qui sont disposées à distance les unes des autres suivant une direction longitudinale (L100) du fuselage et qui définissent un espace intérieur de fuselage (IR) ;
un élément de revêtement intérieur (1) selon l'une des revendications précédentes qui est disposé dans l'espace intérieur de fuselage (IR) de manière à chevaucher au moins une membrure (110) par rapport à la direction longitudinale (L100) du fuselage ;
la structure isolante (5) de l'élément de revêtement intérieur (1) étant disposée de manière à chevaucher la membrure (110) par rapport à la direction longitudinale (L100) du fuselage.

11. Structure de fuselage (100) selon la revendication 10, ladite structure comprenant en outre :
une peau extérieure (130) sensiblement bidimensionnelle qui est fixée à des pieds (111) des membrures (110) ;
une isolation primaire (140) comprenant des premiers mats isolants (141) qui sont disposés sur une surface intérieure (130a), dirigée vers l'intérieur de fuselage (IR), de la peau extérieure (130) entre deux membrures (110) successives dans la direction longitudinale (L100) du fuselage, et des deuxièmes mats isolants (142) qui recouvrent chacun une tête (112), dirigée vers l'espace intérieur (IR), d'une membrure respective (110).

12. Structure de fuselage (100) selon l'une des revendications 10 et 11, une zone d'extrémité (11 ; 12) de l'élément de revêtement intérieur étant disposée à chaque fois entre deux membrures (110) successives dans la direction longitudinale (L100) du fuselage.

13. Structure de fuselage (100) selon l'une des revendications 10 à 12, une pluralité d'éléments de revêtement intérieurs (1) étant disposés les uns à la suite des autres dans la direction longitudinale (L100) du fuselage, et une bande de liaison (150) étant disposée au niveau d'une jointure entre un premier élément de revêtement intérieur (1A) et un deuxième élément de revêtement intérieur (1B) dans la direction longitudinale (L100) du fuselage.

14. Structure de fuselage (100) selon la revendication 13, les premier et deuxième éléments de revêtement intérieurs (1A, 1B) étant formés selon la revendication 8 ou 9, et la bande de liaison (150) étant reliée à la première structure de liaison (6) du premier élément de revêtement intérieur (1A) et à la deuxième structure de liaison (7) du deuxième élément de revêtement intérieur (1B).

15. Structure de fuselage (100) selon la revendication 13 ou 14, la bande de liaison (150) comportant une couche isolante (151) sur un côté arrière orientée à l'opposé de l'espace intérieur de fuselage (IR).
